# EUROPEAN PATENT SPECIFICATION

(11) **EP 4 113 324 B1**
(45) Date of publication and mention of the grant of the patent: **25.03.2026**
(21) Application number: 21182811.6
(22) Date of filing: 30.06.2021
(51) Int. Cl.: G06F 16/51

(54) **METHOD FOR GENERATING AN IMAGE FILE ARCHIVE, METHOD FOR PROVIDING A MICROSCOPIC IMAGE IN AN IMAGE FILE ARCHIVE, METHOD FOR RESTORING A PARTIAL IMAGE FROM AN IMAGE FILE ARCHIVE, AND IMAGE FILE ARCHIVE**
VERFAHREN ZUR ERZEUGUNG EINES BILDDATEIARCHIVS, VERFAHREN ZUR BEREITSTELLUNG EINES MIKROSKOPISCHEN BILDES IN EINEM BILDDATEIARCHIV, VERFAHREN ZUR WIEDERHERSTELLUNG EINES TEILBILDES AUS EINEM BILDDATEIARCHIV UND BILDDATEIARCHIV
PROCÉDÉ DE GÉNÉRATION D'ARCHIVE DE FICHIERS D'IMAGES, PROCÉDÉ DE FOURNITURE D'IMAGE MICROSCOPIQUE DANS UNE ARCHIVE DE FICHIERS D'IMAGES, PROCÉDÉ DE RESTAURATION D'IMAGE PARTIELLE À PARTIR D'UNE ARCHIVE DE FICHIERS D'IMAGES ET ARCHIVE DE FICHIERS D'IMAGES

(43) Date of publication of application: 04.01.2023
(73) Proprietor: PreciPoint GmbH, 85354 Freising (DE)
(72) Inventor: Wildner, Ludwig, 85356 Freising (DE)
(74) Representative: Schmitt-Nilson Schraud Waibel Wohlfrom Patentanwälte Partnerschaft mbB

(56) References cited:
- US-A1- 2016 342 620
- US-A1- 2017 169 544
- US-B2- 7 447 314

## Description

The present invention is in the field of digital microscopy. In particular, the present invention is in the field of handling image data that is generated in the course of digital microscopy.

Considerable efforts are currently being made to digitize the field of pathology. As part of these efforts, currently used analog microscopes are in the process of being replaced by digital microscopes. With digital microscopes, samples / specimens may be scanned and saved as digital image files for being used by a pathologist. Given the magnification levels of microscopes and the desire for detail, which is inherent to the field of microscopy / pathology, digital microscope images tend to have a high resolution and require a lot of storage space. This is particularly the case, when high optical magnification levels are employed, e.g. in the field of oil immersion microscopy, and/or when multiple focal planes are scanned, e.g. for providing image stacks of samples / specimens.

The large image file sizes often lead to slow image processing, which in turn may make working with digital microscopic images cumbersome. The latencies in accessing and navigating digital microscopic images are perceived as a large hurdle by many pathologists.

US 2017/0169544 A1 discloses a memory storage having a linear track and having recorded thereon a multi-resolution image system of an object, the multi-resolution image system including a set of images, each image representing the object and having a respective resolution, wherein the recording is according to a continuous injection from a space-filling curve of the set of images to the linear track, the space-filling curve interlaces the different images, and the intersection between the space-filling curve and each image is on a Hilbert curve.

It would be beneficial to provide image file structures and methods for generating and accessing such image file structures that improve the handling of digital microscopic images.

Exemplary embodiments of the invention include a method for generating an image file archive in accordance with claim 1, a method for restoring a partial image from an image file archive in accordance with claim 8, and an image file archive in accordance with claim 13. Further embodiments of the invention are given in the dependent claims.

Exemplary embodiments of the invention include a method for generating an image file archive, comprising: providing an image in a number m of resolution levels, with each of the m resolution levels having a level-specific number nᵢ of image tiles; providing an image bit stream, comprising the image in the m resolution levels, with the image bit stream having an image data entry for each of the nᵢ image tiles of each of the m resolution levels; on the basis of the number m of resolution levels and the level-specific numbers nᵢ of image tiles, providing an index bit stream, which comprises a succession of address data fields, with each address data field of the succession of address data fields being indicative of a position of a particular image data entry of a particular image tile k at a particular resolution level i in the image bit stream; and combining the image bit stream and the index bit stream into the image file archive.

Exemplary embodiments of the invention allow for an improved handling of digital microscopic images, because the method generates an image file structure where different resolution levels can be accessed directly and conveniently via the respective image tiles. By separately providing an image bit stream and an index bit stream, with the index bit stream allowing tile-based access to the image bit stream via the succession of address data fields, cumbersome searching trough the image data and/or extensive image processing at the time of access may be reduced or prevented. The index bit stream allows for an immediate access to the image data entry of a particular image tile at a particular resolution level out of the image bit stream. The index bit stream may in particular allow for a bit-level access to the desired image data entry / entries in the image bit stream. By providing the image in m resolution levels and providing quick access to the image tiles of all resolution levels, the accessing of desired image tile(s) may be achieved with particularly high access speeds. The presented generating of an image file archive provides the basis for an extremely quick access of selective image data, with the extremely quick access allowing for a very quick zooming in / zooming out of a microscopic image as well as a very quick lateral navigation within a microscopic image at a particular zoom level.

The method comprises providing an image in a number m of resolution levels, with each of the m resolution levels having a level-specific number nᵢ of image tiles. Stated differently, the first resolution level has a first number n₁ of image tiles, the second resolution level has a second number n₂ of image tiles, ..., the i-th resolution level has an i-th number nᵢ of image tiles, ..., and the m-th resolution level has a m-th number nₘ of image tiles. Stated generally, each resolution level i has nᵢ image tiles. The different resolution levels may differ in the level-specific numbers of image tiles. In particular, the higher the resolution, the more image tiles may be present in the resolution level in question. The m resolution levels may represent the image in a so-called image pyramid, i.e. as an assembly of various representations of the image, with lower resolution levels having lower number of image tiles. The image pyramid is a way of picturing a readily provided set of different representations of a particular image in different resolution levels.

The method comprises providing an image bit stream, comprising the image in the m resolution levels, with the image bit stream having an image data entry for each of the nᵢ image tiles of each of the m resolution levels. The image bit stream comprises all image tiles for all m resolution levels. In other words, the image bit stream has a number of image data entries that correspond to the sum of the level-specific numbers nᵢ of image tiles over the m resolution levels. The image bit stream is in particular a succession of image data entries, with the succession of image data entries corresponding to a succession of image tiles and resolution levels. The image bit stream may be organized in any suitable manner. For example, the image bit stream may have the image data entries grouped per resolution level. For example, the image data entries of the image tiles of a particular resolution level may be provided in succession and may be followed by the image data entries of the image tiles of another resolution level, which in turn may be followed by the image data entries of the image tiles of yet another resolution level, etc. Within the respective groups of image data entries, the image data entries may be arranged in accordance with a logical flow of image tiles of the image in the given resolution level, such as in a succession of image tiles from a top left of the image to a bottom right of the image. The image data entries may also be organized differently or may even be scrambled, with the index bit stream taking care of the correct accessing.

The method comprises providing an index bit stream based on the number m of resolution levels and the level-specific numbers nᵢ of image tiles. The index bit stream comprises a succession of address data fields, with each address data field of the succession of address data fields being indicative of a position of a particular image data entry of a particular image tile k at a particular resolution level i in the image bit stream. The number m of resolution levels and the level-specific numbers nᵢ of image tiles per resolution level determine the length of the index bit stream. In particular, the number of address data fields in the index bit stream is determined by the number m of resolution levels and the level-specific numbers nᵢ of image tiles per resolution level. For each image tile of each of the m resolution levels, a respective address data field is provided in the index bit stream.

The index bit stream comprises a succession of address data fields. This means that one address data field is succeeded by another address data field, which in turn is succeeded by another address data field, etc., in the index bit stream. The succession of address data fields is not a look-up table, where address data is given alongside an indication of a resolution level and an image tile number and/ or position. Rather, the succession of address data fields is a linear array of address data fields, which is generated in accordance with and which follows a pre-set logic. In particular, it is possible that no other data / no additional information is provided between address data fields. The succession of address data fields may be an un-interrupted, i.e. a "pure", succession of address data fields.

The image file archive, as generated by the method in accordance with exemplary embodiments of the invention, allows for a highly efficient two-stage accessing of image tiles in the image file archive. On the basis of a specific resolution level and a specific image tile of the specific resolution level, a specific address data field in the index bit stream may be determined. The specific address data field in the index bit stream is determined in accordance with a suitable index access scheme, as will be laid out below. On the basis of the contents of the specific address data field, the location of the image data entry of the specific image tile in the image bit stream may be immediately determined. In particular, the location of the specific image data entry may be provided on a bit-level by the contents of the specific address data field. In this way, a highly direct access to the actual bits of the image data entry may be achieved via the contents of the address data field. The two-stage accessing allows for a highly direct conversion of the resolution level / image tile information into a specific address data field and a highly direct conversion of the information given in the specific address data field into position information regarding the desired specific image data entry in the image bit stream, which in turn allows for a quick and convenient access to the actual bits of the image data entry in the image bit stream.

Each address data field of the succession of address data fields is indicative of a position of a particular image data entry of a particular image tile k at a particular resolution level i in the image bit stream. In particular, each address data field may be indicative of the start of the particular image data entry in the image bit stream. The contents of the address data fields may encode the position of the corresponding image data entries in any suitable manner, i.e. in any manner that is readable and interpretable during an access operation.

Each of the m resolution levels has a level-specific number nᵢ of image tiles. In particular, the resolution levels and the level-specific numbers of image tiles may follow a suitable pre-set logic. For example, in case a given resolution level i has a level-specific number nᵢ of the image tiles, an adjacent lower resolution level may have a level-specific number of nᵢ / 4 image tiles. In other words, adjacent resolution levels may have a factor of 4 in the number of image tiles. While the factor of 4 has proven to be beneficial, because it corresponds to a doubling / halving of the resolution along each of the two image dimensions, other factors of the numbers of image tiles of adjacent resolution levels are also possible. The factor 4 may be applied as long as the number of image tiles is above 1. The lowest resolution level may have exactly 1 image tile. Also, the number of image tiles of the highest resolution level may be chosen in a way that the resolution levels can be applied in an efficient manner. More details in this context will be given below.

Each of the m resolution levels has a level-specific number nᵢ of image tiles. Each of the image tiles is a two-dimensional array of image pixels. It is possible that all image tiles have the same pixel size, with the potential exception of the image tile(s) of the lowest resolution level or a group of lowest resolution levels. All or almost all image tiles having the same size in terms of image pixels may allow for a particularly efficient image processing of the image tiles after being accessed from and read out of the image bit stream.

According to a further embodiment, the method further comprises: including an indication regarding the number m of resolution levels and the level-specific numbers nᵢ of image tiles of the image in the image file archive. By including said additional information into the image file archive, accessing the image file archive allows for deriving information regarding the general set-up of the image pyramid directly from the image file archive. On the basis of said information, it is possible that the set-up of the index bit stream can be immediately determined, allowing a targeted accessing of specific address data fields in the index bit stream, when accessing the image file archive. With the number m of resolution levels and the level-specific numbers nᵢ of image tiles of the image being contained in the image file archive, a convenient handling of the image data in the image file archive may be achieved from the contents of the image file archive alone. The image file archive may be a self-contained structure that contains all information for a very efficient access of image data. It is also possible that the information regarding the number m of resolution levels and the level-specific number nᵢ of image tiles of the image are conveyed outside of the image file archive. They may for example be transmitted by a separate communication channel. It is also possible that the number m of resolution levels and the level-specific numbers nᵢ of image tiles of the image are known according to some convention / standard for the particular type of image being contained in the image file archive. Further, they may be implicitly known from information outside the generated image file archive, such as meta data regarding a digital microscope used, a particular image file archive generating software used, etc.

According to a further embodiment, said including of the level-specific numbers nᵢ of image tiles of the image may comprise including a level-specific number pᵢ of image tile rows and a level-specific number qᵢ of image tile columns for each of the m resolution levels in the image file archive. Said information may contribute to an efficient accessing of the image file archive and an efficient reading of the desired image data entries from the image bit stream. While it is possible that the level-specific numbers pᵢ of image tile rows and the level-specific numbers qᵢ of image tile columns are explicitly given, this information may also be derived from the level-specific numbers nᵢ of image tiles, e.g. from a known aspect ratio of the image. In other words, the information regarding the numbers of image tile rows and image tile columns may be explicitly given or implicitly given by any suitable source of information and/or via contextual knowledge.

According to a further embodiment, the succession of address data fields is generated in accordance with an index generation scheme based on the number nᵢ of resolution levels and the level-specific numbers nᵢ of image tiles. In other words, the number m of resolution levels and the level-specific numbers nᵢ of image tiles per resolution level are inputs to an index generation scheme that sets the order of the succession of address data fields in the index bit stream. The two-dimensional arrangement of the nᵢ image tiles of the i-th resolution level may be a further input to the index generation scheme. For example, the level-specific number pᵢ of image tile rows and the level-specific number qᵢ of image tile columns may be used for the index generation scheme.

In a particular example, the index generation scheme may specify that the locations of the image data entries of the image tiles of the highest resolution level are contained in a first group of address data fields, that the locations of the image data entries of the image tiles of the second highest resolution level are contained in an ensuing second group of address data fields, etc. Within each group of address data fields, it may for example be the convention that the locations of the image data entries of the first row of image tiles are contained in a first sub-group of address data fields, that the locations of the image data entries of the second row of image tiles are contained in a subsequent second sub-group of address data fields, etc.

Generally speaking, the index generation scheme is a scheme that generates the order of the succession of address data fields. In particular, the index generation scheme may generate said order on the basis of high level information of the image pyramid, namely the number m of resolution levels and the level-specific numbers nᵢ of image tiles, potentially given in the form of level-specific numbers pᵢ, qᵢ of image tiles rows and image tile columns. The index generation scheme is a formula and/or a set of rules and/or a function for generating the order of the succession of address data fields. In particular, the index generation scheme is an unambiguous scheme that maps all image tiles of the image, as given in the m resolution levels, to particular address data fields within the succession of address data fields of the index bit stream.

According to a further embodiment, each of the image data entries in the image bit stream comprises image data only and each address data field of the succession of address data fields is indicative of the position of the particular image data entry of the particular image tile k at the particular resolution level i in the image bit stream and indicative of a length of the particular image data entry of the particular image tile k at the particular resolution level i in the image bit stream. In this way, the image bit stream may be accessed in a particularly targeted manner and with a very low amount of data processing or even no data processing for reading out a particular image data entry. In case each address data field contains both an indication of the position of the particular image data entry and an indication of the length of the particular image data entry, a "dumb" reading out of data from the image bit stream may be performed, with said "dumb" access to the image bit stream still yielding the desired image data. Such a set-up may be particularly beneficial in a distributed data storage and image analysis system. For example, in case the image file archive is stored on a server, such as a cloud server, and the person working with the image data is using a client device, remote from the cloud server, the client device may access the image data as follows. In an initialisation phase, the client device may download basic meta data of the image file archive and the index bit stream of the image file archive. During regular image data access operations, the client device may transmit only the indications of the position and the length of the particular image data entry of interest and may receive the according image data from the cloud server without the need for the cloud server to review or analyze the image data in any way. The cloud server does not have to provide any data processing capabilities and may merely provide "dumb" responses to reading requests. Both the requirements for particular data processing capabilities on the server side as well as the communication overhead between the client device and the server may be kept very low.

According to an alternative embodiment, each of the image data entries in the image bit stream comprises an entry header and image data, with the entry header of the particular image data entry of the particular image tile k at the particular resolution level i being indicative of a length of the image data in the particular image data entry of the particular image tile k at the particular resolution level i in the image bit stream. In this way, the index bit stream may be kept particularly lean, while the processing requirements upon accessing image data entries is still kept low. In particular, after the entry header of the image data entry is analyzed and the length of the image data in the particular image data entry is known, the image data can be read out via a simple read request. At the expense of an additional data processing step for determining the length of the image data from the image data entry, the index bit stream may be kept particularly short and very efficiently handleable for determining the desired location information.

It is pointed out that it is also possible that the image bit stream comprises image data only and that the address data fields of the index bit stream are solely indicative of the position of the particular image data entry of the particular image tile k at the particular resolution level i in the image bit stream. In that case, the length of the image data may be inferred at the time of reading out the image data entry from the image bit stream. This may for example be done via checking the read out image data for a predefined end of image data entry bit sequence. Such predefined end of image data entry bit sequences are common in many image file formats. However, checking all read out image data for such predefined bit sequences increases the burden on the device where the image bit stream is stored and accessed and/or the burden on the communication channel between the device storing the image bit stream and the device issuing a reading request for image data.

According to a further embodiment, the method further comprises: including an index type specification in the image file archive, the index type specification indicating a length of the address data fields in the index bit stream and indicating whether the address data fields of the index bit stream contain the position or the position and length of the image data entries in the image bit stream. In this way, the image file archive may be a self-contained image file structure, from which the information regarding the interplay between the index bit stream and the image bit stream may be available. It is also possible that said information is not part of the image file archive. Such information may also be implicitly clear to a device issuing read requests, such as from a prior agreement on the index type and/or some convention / standard regarding the index type for a particular image and/or a particular image class.

According to a further embodiment, the address data fields of the succession of address data fields have the same length. In particular, all of the address data fields may have the same length. In this way, when knowing the order of the address data fields, a specific address data field may easily accessed in a targeted manner. A direct accessing of the address data fields may be achieved on a bit level, without having to go through any sort of pointer mechanism for the individual data address fields. The index bit stream may allow for a truly bit-based access.

According to a further embodiment, the address data fields have a length of between 2 bytes and 12 bytes, in particular a length of between 3 bytes and 10 bytes, further in particular a length of between 4 bytes and 8 bytes. These lengths of the address data fields have been found to provide a good compromise between a lean and well-handeable index bit stream, while providing reasonable storage space for specifying the position of the particular image data entry per address data field.

According to a further embodiment, the image file archive is a zip archive. In this way, the image file archive may be provided in the form of a well-known container structure that can be saved, transmitted, copied, accessed, etc. in accordance with established protocols. The zip archive may apply a layer of lossless compression to its contents. It is also possible that the image file archive is a zip archive and that the index bit stream and/or the image bit stream are contained in the zip archive in an un-compressed manner. In other words, while providing a zip container structure around the index bit stream and the image bit stream, the zip archive may be configured to leave the index bit stream and/or the image bit stream un-compressed. Such un-compressed structure may allow for an efficient locating of desired image data, because the de-compression of the index bit stream and/or the image bit stream may be dispensed with. In general, irrespective of the particular implementation of the image file archive, i.e. irrespective of whether the image file archive is a zip archive or not, the index bit stream and/or the image bit stream may be contained in the image file archive without archive-level compression.

According to a further embodiment, the image data entries may be or may comprise, in particular comprise as image data portions, image files according to one of the following file formats: tiff, jpg, jpg2000, png, bitmap. Other suitable image file formats are possible as well.

According to a further embodiment, the image bit stream is provided in the form of an embedded file archive, in particular in the form of an embedded zip archive. In this way, the image bit stream may be provided in a nested archive structure, which may also be referred to as an archive in archive structure. The image data entries may be provided in the form of individual entries of the embedded file archive, and the embedded file archive may form the image bit stream with compressed image data entries. In this way, a compression of the image data entries may be achieved, while still allowing for targeted access to the individual image data entries via the address data fields of the index bit stream. The compression of the entries of the embedded file archive may be a lossless compression.

According to a further embodiment, the image is a microscopic image, resulting from scanning of a sample via a digital microscope. For the operation of the digital microscope, the sample / specimen may be provided in the form of a microscope slide, and said microscope slide may be placed on a stage of the digital microscope. The sample may be illuminated / excited via a suitable illumination / excitation source, and information about the sample / specimen may be captured via a suitable sensor, such as a camera sensor. During scanning of the sample, illumination / excitation of the sample and capturing of sample information may be carried out along a suitable pattern across the sample, such as a row-wise scanning pattern, a column-wise scanning pattern or any other suitable scanning pattern. The digital microscope may be a digital light microscope, in particular a transmitted light microscope, or a fluorescence microscope or any other suitable type of microscope. Different levels of magnification may be set via different microscope objectives and/or other magnification components within the digital microscope.

The method for generating an image file archive, as described herein, is particularly beneficial in the context of a microscopic image. This is because the analysis of microscopic images is a highly selective process. The areas of interest within a microscopic image are generally comparably sparsely distributed across the microscopic image. However, for the areas of interest, a high attention to detail is often desired. Accordingly, analyzing a microscopic image often requires repeated zooming in and out of the microscopic image, with a lower resolution representation of the image allowing for a good overview over the microscopic image and a zooming in at few selected portions of the microscopic image allowing for the desired detailed analysis of the microscopic image. This kind of analysis of microscopic images is very efficiently supported by the image file archive, as generated in accordance with the methods described herein, because specific image tiles of specific resolution levels may be accessed in a highly targeted and efficient manner. This in turn may allow for rapid navigation, in particular rapid zooming in and zooming out, of the microscopic image.

Exemplary embodiments of the invention further include a method for providing a microscopic image in an image file archive, comprising: scanning a sample, using a digital microscope, for creating a microscopic image; providing said microscopic image in a number m of resolution levels, with each of the m resolution levels having a level-specific number nᵢ of image tiles; and with said microscopic image, carrying out the method for generating an image file archive in accordance with any of the embodiments described above. The additional features, modifications and effects, as described above with respect to the method for generating an image file archive, apply to the method for providing a microscopic image in an image file archive in an analogous manner.

According to a further embodiment, the method comprises scanning the sample several times for creating a plurality of microscopic images; and including a respective image bit stream and a respective index bit stream for each of the plurality of microscopic images in the image file archive. The respective image bit streams and the respective index bit streams may be provided in accordance with any of the embodiments as described above. The plurality of microscopic images may be the result of scanning the sample with different microscope objectives and/or scanning the sample at multiple focal planes and/or scanning the sample with other varying parameters of the digital microscope. In this way, different views of a particular sample may be combined in the image file archive, and a switching between the different views as well as an efficient navigation within the individual views, as described above, may be facilitated with a single image file archive. Also, visualization techniques, such as direct volume rendering, may be supported by the image file archive, containing multiple views of a particular sample, in a highly effective manner.

According to a further embodiment, the scanning of the sample for creating the microscopic image is carried out with a light microscope, in particular a transmitted light microscope. According to a particular embodiment, the sample is immersed in an immersion liquid, in particular immersed in an immersion oil. In such an immersed state, particularly high magnifications of the sample may be achieved with the digital microscope. This in turn may lead to particularly high image resolutions, in which case large image sizes result, for which the efficient access within the image file archive, as described herein, may be particularly beneficial. The digital microscope may also be a fluorescence microscope. The scanning of the sample may also take place with any other suitable technique, in particular with spectroscopy-based techniques. The scanning may also be carried out in accordance with one or more of the following techniques: Raman spectroscopy, CARS (Coherent Anti-Stokes Raman Scattering), SRS (Stimulated Raman Scattering), SHG (Second Harmonic Generation), TPEF (Two Photon Excited Fluorescence), FLIM (Fluorescence Lifetime Imaging).

Exemplary embodiments of the invention further include a method for restoring a partial image from an image file archive, the image file archive comprising an image bit stream, comprising an image in a number m of resolution levels, with each of the m resolution levels having a level-specific number nᵢ of image tiles and with the image bit stream having an image data entry for each of the nᵢ of image tiles of each of the m resolution levels, the method comprising: receiving a user selection regarding an area of interest within the image, the user selection indicating the location and extension of the area of interest; on the basis of the location and extension of the area of interest, selecting a specific resolution level of the image and determining at least one specific image tile at the specific resolution level, corresponding to the area of interest; from an index bit stream, which comprises a succession of address data fields, with each address data field being indicative of a position of a particular image data entry of a particular image tile k at a particular resolution level i in the image bit stream, determining at least one position in the image bit stream for at least one specific image data entry, the at least one specific image data entry corresponding to the at least one specific image tile at the specific resolution level; and restoring the partial image from the at least one specific image data entry contained in the image bit stream at the at least one position. The additional features, modifications and effects, as described above with respect to the method for generating an image file archive, apply to the method for restoring a partial image from an image file archive in an analogous manner.

The method comprises receiving a user selection regarding an area of interest within the image. The area of interest may in particular be a portion of the image that the user wants to be displayed on a screen / display. The user selection indicates the position and extension of the area of interest. In particular, the user selection may implicitly specify the position and extension of the area of interest. For example, a user may make the user selection by zooming into and laterally navigating an image preview. Such zooming and laterally navigating may be done by a touch screen or via the operation of a mouse or via any other suitable input device. The position and the extension of the area of interest may result from the zooming and navigating with respect to the image preview. It is pointed out that the area of interest within the image may be selected by the user in any suitable manner, as long as the method receives a user selection, the information of which may allow for a derivation of the position and extension of the area of interest.

The method comprises receiving a user selection regarding an area of interest within the image. The user selection may be any suitable kind of user selection. The user selection may be received from a human user via a suitable user interface, in particular via a suitable GUI. It is possible that the user selection is generated by a human user in a remote location and received via an extended communication network, such as via the internet. It is also possible that the user selection is a machine-generated user selection. The user selection may in particular be the result of a machine selection of an area of interest. The user selection may be generated by a machine in accordance with conventionally programmed algorithms and/or may be generated via machine learning / artificial intelligence.

The method is for restoring a partial image from an image file archive. With the user selection specifying a portion of the image that is of interest, the method steps allow for providing said portion of the image from the image file archive. The method is for restoring a selected portion of the image / a partial image from the image file archive.

The terms particular image data entry, particular image tile, and particular resolution level are used to describe individualized items of the entirety of the image bit stream. Each of the entirety of the image data entries / image tiles / resolution levels is a particular image data entry / particular image tile / particular resolution level, when looked at in an individual manner. In contrast thereto, the terms specific image data entry, specific image tile, and specific resolution level are used to describe those image data entries / image tiles / resolution levels that are of interest on the basis of the user selection. In other words, the specific image data entries / specific image tiles / specific resolution levels relate to that subset of items in the image bit stream that is of interest for restoring the partial image.

According to a further embodiment, the method further comprises: obtaining the number m of resolution levels and the level-specific numbers nᵢ of image tiles from the image file archive. In this way, information regarding the general set-up of the image pyramid may be derived directly from the image file archive. On the basis of said information, it may be possible to determine the set-up of the index bit stream, thus facilitating a highly targeted accessing of specific address data fields in the index bit stream, when accessing the image file archive. It is also possible that the information regarding the number m of resolution levels and the level-specific numbers nᵢ of image tiles are obtained from outside of the image file archive, as discussed above.

According to a further embodiment, said determining of the at least one position in the image bit stream for the at least one specific image data entry of the at least one specific image tile k at the specific resolution level comprises: selecting at least one specific address data field from the succession of address data fields in the index bit stream in accordance with an index access scheme. In particular, based on the selection of a specific resolution level i of the image and the determination of at least one specific image tile k at the specific resolution level i, at least one specific address data field, corresponding to said at least one specific image tile, may be selected from the succession of the address data fields. With the information contained in said at least one specific address data field, the at least one specific image data entry may be accessed in a highly targeted and efficient manner in the image bit stream.

In a particular example, the index access scheme may specify that the locations of the address data fields for the image data entries of the image tiles of the highest resolution level are contained in a first group of address data fields, that the locations of the address data fields for the image data entries of the image tiles of the second highest resolution level are contained in an ensuing second group of address data fields, etc. Within each group of address data fields, it may for example be the convention that the locations of the address data fields for the image data entries of the first row of image tiles are contained in a first sub-group of address data fields, that the locations of the address data fields for the image data entries of the second row of image tiles are contained in a subsequent second sub-group of address data fields, etc.

Generally speaking, the index access scheme is a scheme that derives the order of the succession of address data fields. In particular, the index access scheme may derive said order on the basis of high level information of the image pyramid, namely the number m of resolution levels and the level-specific numbers nᵢ of image tiles, potentially given in the form of level-specific numbers pᵢ, qᵢ of image tile rows and image tile columns. The index access scheme is a formula and/or a set of rules and/or a function for deriving the order of the succession of address data fields. In particular, the index access scheme is an unambiguous scheme that maps all image tiles of the image, as given in the m resolution levels, to particular address data fields within the succession of address data fields of the index bit stream.

According to a further embodiment, the index access scheme is a bit-level index access scheme. In particular, the index access scheme may return a specific bit position of a specific address data field in the index bit stream for a specific image tile at a specific resolution level. In this way, the address data field of interest may be accessed in a highly direct and efficient manner.

According to a further embodiment, said restoring of the partial image comprises combining a plurality of specific image tiles into an assembled image. The assembled image may correspond to or contain the area of interest. According to a particular embodiment, the method further comprises cropping the assembled image to correspond to the area of interest. The assembled image / the cropped assembled image may be the restored partial image. In this way, the method may ensure that no or only little image overhead, i.e. no or only small image portions that the user may not be interested in, are restored, thus helping in keeping the downstream image processing efficient. The cropping of the assembled image to correspond to the area of interest may crop the assembled image exactly to the area of interest or may allow for some margin around the area of interest.

According to a further embodiment, said selecting of the specific resolution level of the image and said determining of at least one specific image tile at the specific resolution level is additionally based on a representation resolution, indicative of a desired size of the partial image. In this way, the restored partial image may be highly directly based on the user's wishes. It is also possible that the selection of the specific resolution level is based on the technical properties of a user viewing system, such as the screen depicting the restored image. In a particular embodiment, the representation resolution is indicative of a screen resolution of a screen for depicting the partial image. In this way, the selection of the specific resolution level may allow for the provision of a high quality image, taking into account the screen resolution as well as the zoom level within the image.

According to a further embodiment, the method further comprises displaying the restored partial image on a screen. In this way, the result of the method, as described above, is provided to the user in an intuitive manner. The displayed partial image may form the basis for a user evaluation, in particular a user evaluation of a microscopic image. Also, the displayed partial image may form the basis for a further user selection, also referred to as updated user selection herein, such that the user may reach those portions of the image that he/she is particularly interested in in an iterative manner.

Exemplary embodiments of the invention further include an image file archive generated in accordance with a method for generating an image file archive, as described in any of the embodiments above. The additional features, modifications and effects, as described above with respect to the method for generating an image file archive, apply to the image file archive in an analogous manner.

Exemplary embodiments of the invention further include an image file archive, comprising: an image bit stream, comprising an image in a number m of resolution levels, with each of the m resolution levels having a level-specific number nᵢ of image tiles and with the image bit stream having an image data entry for each of the nᵢ image tiles of each of the m resolution levels; and an index bit stream, which comprises a succession of address data fields, with each address data field being indicative of a position of a particular image data entry of a particular image tile k at a particular resolution level i in the image bit stream. The additional features, modifications and effects, as described above with respect to the method for generating an image file archive, apply to the image file archive in an analogous manner. In particular, the image file archive may comprise an indication regarding the number m of resolution levels and the level-specific numbers nᵢ of image tiles of the image in the image file archive. Also, the image file archive may comprise an index type specification in the image file archive, the index type specification indicating a length of the address data fields in the index bit stream and indicating whether the address data fields of the index bit stream contain the position or the position and length of the image data entries in the image bit stream.

Further exemplary embodiments of the invention are described with respect to the accompanying drawings, wherein:
Fig. 1 shows a perspective view of a digital microscope, which may be used for generating a microscopic image, on the basis of which an image file archive in accordance with exemplary embodiments of the invention may be generated;
Fig. 2 shows a schematic diagram of selected components of the digital microscope of Fig. 1;
Fig. 3 shows a schematic diagram of a digital microscope system, as seen from a user perspective, which may be used for generating image file archives in accordance with exemplary embodiments of the invention and may be used for restoring partial images from image file archives in accordance with exemplary embodiments of the invention;
Fig. 4 schematically illustrates a microscopic image, split up in a plurality of image tiles;
Fig. 5 schematically illustrates an image pyramid for the microscopic image of Fig. 4;
Fig. 6 shows an image file archive in accordance with an exemplary embodiment of the invention for the microscopic image of Fig. 4 / the image pyramid of Fig. 5;
Fig. 7 shows an image file archive in accordance with another exemplary exemplary embodiment of the invention for the microscopic image of Fig. 4 / the image pyramid of Fig. 5;
Fig. 8 shows an image file archive in accordance with another exemplary embodiment of the invention, the image file archive containing a plurality of images.

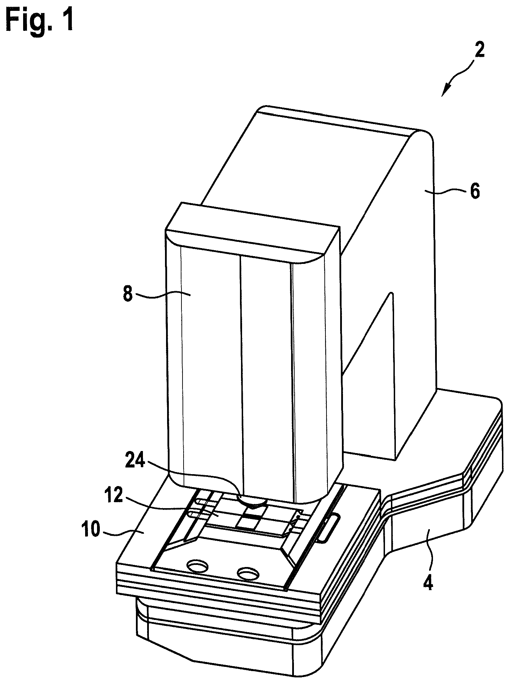

Fig. 1 shows a digital microscope 2 in a perspective, three-dimensional view, which may be used for generating a microscopic image, on the basis of which an image file archive in accordance with exemplary embodiments of the invention may be generated. The digital microscope 2 has a base 4, which supports the digital microscope 2. The base 4 may be placed on a table for providing a secure stand.

The base 4 comprises an illumination assembly and a stage drive assembly, which are blocked from view by a base housing in Fig. 1. A stage 10 is mounted to the base 4. The stage is movable with respect to the base 4. In particular, the stage 10 is movable in two dimensions, referred to as x- and y-directions herein. In operation, the stage 10 is moved by the stage drive assembly in the x- and y-directions.

The stage 10 has a light transmissive portion, in particular a transparent portion. A sample may be placed on the light transmissive portion. In the operating scenario depicted in Fig. 1, the sample 12 comprises two slides, arranged on the light transmissive portion of the stage 10 via a clipping mechanism. In operation, the illumination assembly illuminates the sample 12 from the bottom. The plane of the light transmissive portion of the stage 10 is referred to as the x/y plane of the digital microscope.

The digital microscope 2 further comprises a support arm 6 and a tube assembly 8. The support arm 6 is shaped to support the tube assembly 8, such that the tube assembly 8 hovers over the stage 10. The tube assembly 8 houses various optical components. In particular, the tube assembly 8 houses a digital camera and an optical system, which in turn has a tube objective and a microscope objective 24 in the exemplary embodiment of Fig. 1. While the digital camera and the tube objective are blocked from view in Fig. 1 by a tube assembly housing, the microscope objective 24 extends therefrom towards the stage 10.

The tube assembly 8 is movable with respect to the support arm 6 in a moving direction orthogonal to the x/y plane. In other words, the tube assembly 8 is movable in the z-direction of the microscope frame of reference. While this movement is quite limited, it is sufficient to bring the sample 12 in focus with respect to the optical system contained in the tube assembly 8.

In operation, the stage drive assembly brings the stage 10 to desired positions in the x- and y-directions. The stage drive assembly may have any kind of suitable actuators, such as two small-scale electric motors for the two directions of movement. The illumination assembly provides for illumination of the sample 12 from underneath, and image data of that portion of the sample 12 placed in the way of light from the illumination assembly to the digital camera can be captured by the digital camera. Via driving the stage 10 to various positions, the sample 12 can be scanned and image data of the whole sample 12 can be generated.

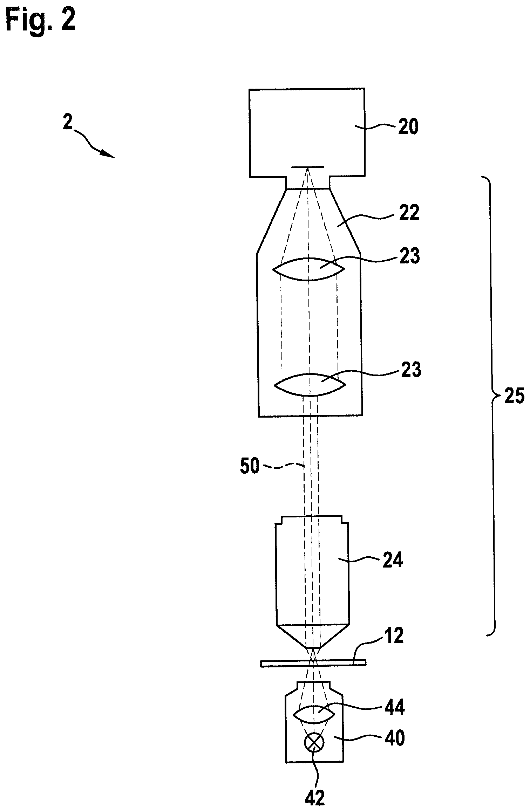

Fig. 2 shows selected components of the digital microscope 2 of Fig. 1 in a schematic view. In particular, Fig. 2 illustrates the components relevant for the illumination of the sample 12 and the directing of light within the tube assembly 8. As described above, the illumination assembly 40 is arranged below the stage 10, i.e. below the sample 12, and directs lights upwards towards the sample 12. In the exemplary embodiment of Fig. 2, the illumination assembly 40 has a light source 42 and a collimating lens 44 for directing a large amount of light towards that portion of the sample 12, whose representation is captured. The light source 42 may be a white light source, emitting broad band visible light. It is pointed out that the illumination assembly 40 may have any suitable set-up / design.

The digital microscope 2 has an optical system 25. In the exemplary embodiment of Fig. 2, the optical system 25 has a tube objective 22 and a microscope objective 24. The tube objective 22 has individual tubus lenses 23.

The optical system 25 is provided for achieving a desired magnification of the portion of the sample 12 whose representation is captured. The microscope objective 24 and the tube objective 22 jointly provide a magnification of a portion of the sample 12, with the magnified representation of the portion of the sample 12 being captured by the digital camera 20. In other words, the microscope objective 24 and the tube objective 22 jointly provide the optical magnification for the image data to be captured. While the magnification may be a product of both the design of the tube objective 22 and the design of the microscope objective 24, it is customary nomenclature to attribute a magnification factor to the microscope objective 24. On the basis of this nomenclature, the microscope objective 24 may be said to be a 20x magnification microscope objective, a 40x magnification microscope objective, a 60x magnification microscope objective or any other suitable magnification factor microscope objective.

The digital microscope 2 further has a digital camera 20. The digital camera 20 has an image sensor and a shutter. It may also have other components customary in the field of digital cameras, which may contribute to the operation of the digital camera capturing image data. The tube objective 22 directs the light, coming from the microscope objective 24, towards the image sensor of the digital camera 20. In this way, a light path 50 from the illumination assembly 40 through the sample 12, through the microscope objective 24, through the tube objective 22, and to the image sensor of the digital camera 20 is established. The digital camera 20 may be a digital color camera, for example built with CMOS technology. It is pointed out that the digital camera may be any suitable digital camera for capturing the image data.

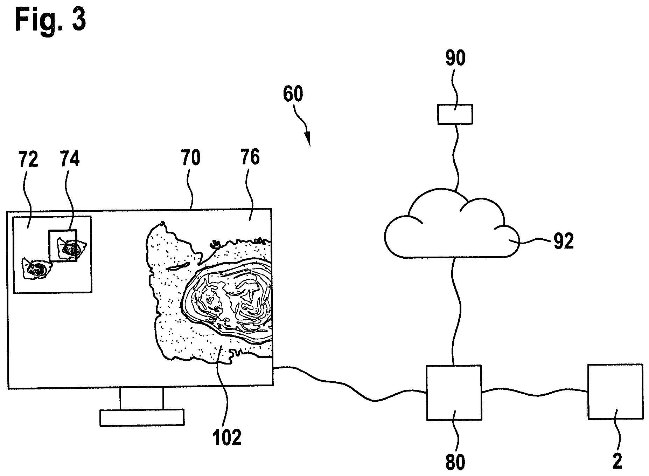

Fig. 3 shows a schematic diagram of a digital microscope system 60, which may be used for generating image file archives in accordance with exemplary embodiments of the invention and may be used for restoring partial images from image file archives in accordance with exemplary embodiments of the invention. The digital microscope system 60 comprises a digital microscope 2. The digital microscope 2 may be a digital microscope 2 having the mechanical set-up as described with respect to Fig. 1 above and the optical set-up as described with respect to Fig. 2 above. With respect to Fig. 3, the focus is on the user perspective and the user interaction with the digital microscope system 60.

The digital microscope system 60 further comprises a computer 80, coupled to the digital microscope 2, and a screen 70, coupled to the computer 80. The computer 80 may be any kind of suitable processing device that provides for the interaction between the screen 70 and the digital microscope 2 in a suitable manner. The computer 80 may for example be a standard personal computer, embodied as a desktop computer or a laptop. The processing capacity, exemplarily provided by the computer 80 in the exemplary embodiment of Fig. 3, may also be embedded into the digital microscope 2 or into the screen 70. The screen 70 may for example be part of a tablet or a smartphone, having both the screen functionality and the processing functionality for interfacing directly with the digital microscope 2. It is also possible that the processing capacity, exemplarily provided by the computer 80 in the exemplary embodiment of Fig. 3, may be provided on a remote processing device, such as a remote server as part of a cloud-based system.

The screen 70 is the control interface for the user of the digital microscope system 60. In the exemplary embodiment of Fig. 3, the screen 70 is a touch screen, so that the screen 70 provides both user input functionality and image output functionality. The user may control the whole operation of the digital microscope system 60 via the touch screen 70. However, it is also possible that other input devices are provided in addition / as an alternative to the touch screen 70. For example, a keyboard and/or a mouse and/or any other suitable input device may be provided for the user to control the digital microscope system 60. It is also possible that multiple screens are provided for the output of images. It is further possible that images are output to other entities. For example, images may be saved to a hard drive or other data storage medium in file format.

In the exemplary embodiment of Fig. 3, the digital microscope system 60 further comprises a server 90. The server 90 may in particular be a remote server / cloud server. In the exemplary embodiment of Fig. 3, the computer 80 and, thus, also the digital microscope 2 and the screen 70 are coupled to the remote server 90 via a communication network 92, such as the internet.

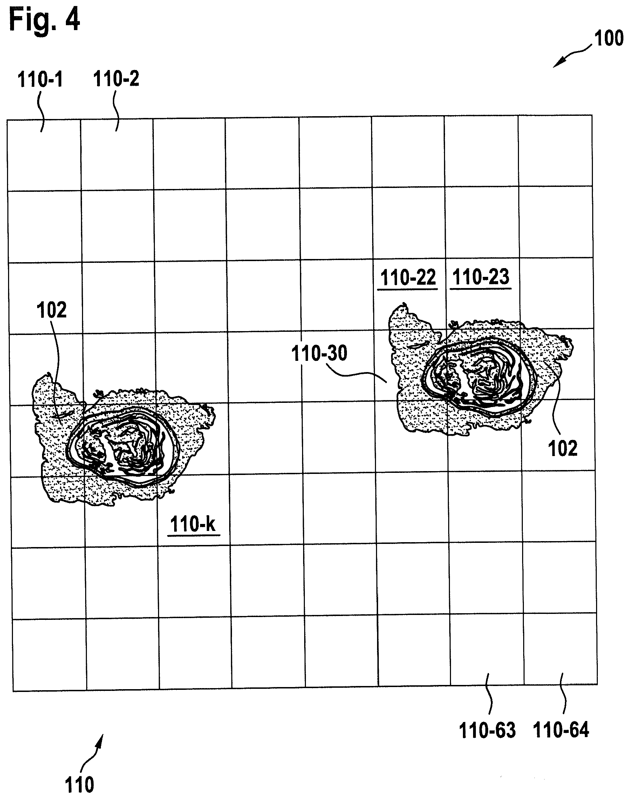

The digital microscope system 60 may be used for various different operations. The digital microscope system 60 may be used for scanning a sample with the digital microscope 2 and for generating and storing an image file archive containing image data of said sample. A sample may be placed on the stage of the digital microscope 2 and a scanning routine may be carried out, in order to generate a high resolution image of the sample. Various resolution levels of the image may then be generated, and an image file archive, containing the image in the various resolution levels may be generated. These steps may be carried out by the computer 80 or carried out in different entities under the control of the computer 80. The generated image file archive may be stored locally on the computer 80 or remotely on the server 90. The details of the generation of the image file archive and the properties of the image file archive will be exemplarily described below, in particular with respect to Figs. 4 to 8.

The digital microscope system 60 may further be used for viewing images on the screen 70. In particular, the digital microscope system may be used for viewing images restored from image file archives. The image file archives may be stored on the computer 80 and/or the server 90 and may be read out therefrom. With the image file archives, as exemplarily described below, partial images can be restored and displayed in a very quick and efficient manner.

In the exemplary embodiment of Fig. 3, the screen 70 provides two different outputs. In the upper left corner of the screen 70, a preview 72 of an image is displayed. The preview 72 is an overview of the image that is currently of interest and that a user is navigating. It is also possible that the preview 72 is dispensed with and that the user navigates through the image without such a preview 72.

In the exemplary embodiment of Fig. 3, the user may select an area of interest 74 in the preview 72. The selection of the area of interest 74 is a user selection that determines which portion of the image is to be restored from the image file archive and displayed in a full screen window 76. This will be described in more detail below, after the properties of exemplary image file archives in accordance with exemplary embodiments of the invention have been described.

The user selection may be made in any suitable manner, such as with the user's fingers on the touch screen, with a suitable stylus, with an ancillary input device, such as a mouse, with menu-based selection tools, etc.. For the depicted use case, it is assumed that the user selected the area of interest 74 with his / her fingers on the touch screen in the portion of the screen 70 where the preview 72 is depicted. The user selection is indicative of the position and extension of the area of interest. In other words, the user selection contains an unambiguous determination, which portion of the image is the area of interest for the user. The unambiguous determination may be in any form that allows for the derivation of the position and extension of the area of interest. For example, the user selection, as seen from the digital microscope system 60, may comprise the coordinates of the bottom left corner of the area of interest as well as the two-dimensional extension in the x/y coordinate system of the preview 72. In another example, the user selection, as seen from the digital microscope system 60, may comprise the coordinates of the top left corner and the bottom right corner of the area of interest. In yet another example, the user selection, as seen from the digital microscope system 60, may comprise a single coordinate, such as the center coordinate of the area of interest, and a zoom level as compared to the size of the entire sample.

In the exemplary embodiment of Fig. 3, the full screen window 76 covers the entire screen 70, with the exception of the preview 72. It is also possible that the user makes the user selection in the full screen window 76. For example, the user may navigate the image, which may extend beyond the screen 70, via lateral translation and zooming operations. In a particular example, the user may use two-finger zooming commands, as are for example known from smartphone applications. The extension of the area of interest may also be referred to as a zoom level of the area of interest. A user selection comprising the position and the zoom level of the area of interest is therefore also an indication of the position and the extension of the area of interest. In a particular example, the preview may be initially shown on the full screen, with the user navigating to the area of interest purely by lateral translation and zooming operations.

From the user point of view, the selection of the area of interest 74 results in an enlarged version of the area of interest 74 being displayed in the full screen window 76. The portion of the image, as displayed in the full screen window 76, is said to correspond to the area of interest 74. The term corresponding does not necessarily mean that the area of interest and the image portion displayed in the full screen window 76 are perfectly congruent. For example, it is also possible that the full screen window 76 shows a somewhat larger portion of the image than the area of interest 74, such as for matching the dimensions of the screen 70.

Fig. 4 shows an exemplary microscopic image 100. The image 100 depicts two biological cells 102 and ample empty space around the two biological cells 102. The image 100 may be the result of a scanning operation of a biological sample with the digital microscope 2, as described above with respect to Figs. 1 to 3.

In Fig. 4, the image 100 is shown in a first resolution level 110. In the first resolution level 110, the image 100 is represented by 64 image tiles 110-1, 110-2, ..., 110-63, 110-64. The 64 image tiles of the first resolution level 110 are arranged in a 8x8 matrix of image tiles. The image tiles 110-1, ..., 110-64 all have the same pixel size. For example, each of the image tiles 110-1, ... , 110-64 may have a pixel size of 256x256 pixels. It is understood that the number of image tiles and the pixel size of the image tiles is exemplary only. In particular, the number of image tiles is chosen in a way to result in an easily graspable and illustrative representation of the image 100 to the reader. It is understood that, depending on the magnification level of the digital microscope 2, depending on the properties of the digital camera of the digital microscope 2, and depending the desired native resolution for the image 100, much higher numbers of image tiles may be employed.

As stated above, the image 100 contains two biological cells 102 and ample free space around them. This results in many of the image tiles having little or no content, while a few image tiles contain a comparably large amount of image data. For example, the indicated image tiles 110-1, 110-2, 110-63, 110-64 contain substantially no image data. In contrast thereto, three image tiles 110-22, 110-23, 110-30 with a medium to large amount of image data have been exemplarily indicated.

When generally referring to an individual, but unspecified image tile, the reference 110-k is used for the first resolution level 110.

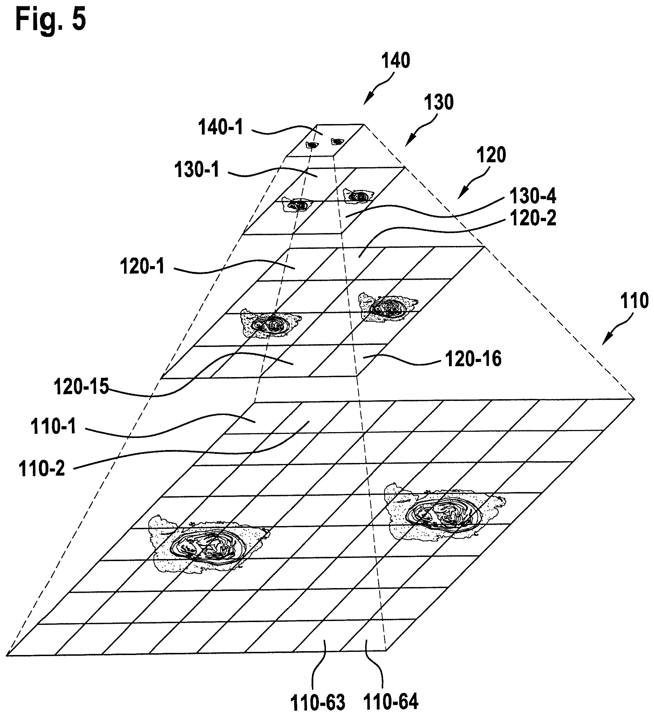

Fig. 5 depicts the image 100 of Fig. 4 in a plurality of resolution levels. In particular, Fig. 5 depicts the image 100 of Fig. 4 in a first resolution level 110, a second resolution level 120, a third resolution level 130, and a fourth resolution level 140. The four resolution levels 110, 120, 130, 140 are depicted in a three-dimensional representation, which is commonly referred to as an image pyramid. Accordingly, it can be said that Fig. 5 depicts an image pyramid for the image 100 of Fig. 4.

The first resolution level 110 has 64 image tiles 110-1, 110-2, ... , 110-63, 110-64. The second resolution level 120 has 16 image tiles 120-1, 120-2, ... , 120-15, 120-16. The third resolution level 130 has four image tiles 130-1, ... , 130-4. The fourth resolution level 140 has one image tile 140-1.

In the exemplary image pyramid of Fig. 5, all image tiles of all resolution levels 110, 120, 130, 140 have the same pixel size. As stated above, this pixel size of the image tiles may be 256x256 pixels or may be another suitable size. As a result, the image resolution is halved from one resolution level to the next resolution level in each of the two image dimensions. Accordingly, the total number of pixels is divided by four from one resolution level to the next. In particular, the total number of image pixels in the second resolution levels 120 is 1/4 of the total number of image pixels in the first resolution level 110, the total number of image pixels in the third resolution level 130 is 1/4 of the total number of image pixels in the second resolution level 120, and the total number of image pixels in the fourth resolution level 140 is 1/4 of the total number of image pixels in the third resolution level 130.

As stated above, the first resolution level 110 may be the result of a scanning operation of a biological sample with the digital microscope 2. The second, third, and fourth resolution levels may be the result of down-converting the first resolution level 110. Such down conversion may be carried out with suitable down-conversion algorithms, which are per se known. The image pyramid of Fig. 5 may be the starting point for a method for generating an image file archive in accordance with an exemplary embodiment of the invention.

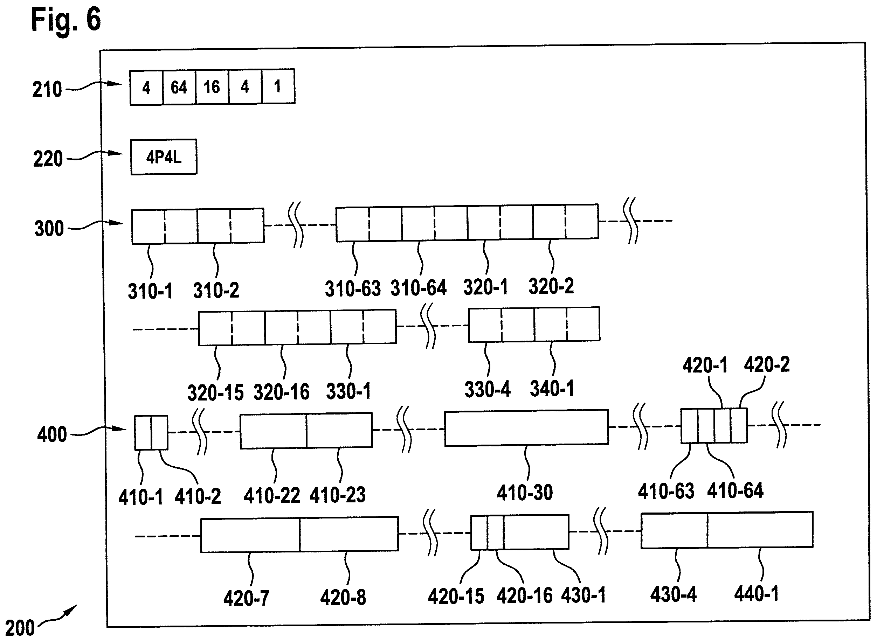

Fig. 6 shows an image file archive 200 in accordance with an exemplary embodiment of the invention. The image file archive 200 may be the result of a method for generating an image file archive in accordance with an exemplary embodiment of the invention. In particular, the image file archive 200 may be the result of a method for generating an image file archive in accordance with an exemplary embodiment of the invention, when applied to the image pyramid of Fig. 5, i.e. to the image 100 of Fig. 4 provided in different resolution levels.

The image file archive 200 comprises an archive set-up field 210, an index type field 220, an index bit stream 300, and an image bit stream 400. The index bit stream 300 comprises a succession of address data fields, as laid out below. The image bit stream 400 comprises a succession of image data entries, as laid out below.

The archive set-up field 210 contains basic information about the set-up of the image pyramid, i.e. basic information about the number m of resolution levels and the numbers of image tiles nᵢ per resolution level. For the exemplary image 100 of Figs. 4 and 5, the archive set-up field 210 contains the indication that the image is given in "4" resolution levels and that the first, second, third, and fourth resolution levels have "64", "16", "4", and "1" image tiles, respectively. In other words, the archive set-up field 210 contains the indications m=4, n₁=64, n₂=16, n₃=4, and n₄=1.

The index type field 220 contains an index type specification, which is "4P4L" in the exemplary embodiment of Fig. 6. The specification "4P4L" means that every address data field of the index bit stream 300 has a total length of 8 bytes and that four of said bytes are used for encoding a position of an associated image data entry in the image bit stream 400 and four bytes are used for encoding a length of the associated image data entry in the image bit stream 400.

As stated above, the index bit stream 300 comprises a succession of address data fields. In particular, the index bit stream 300 comprises an address data field for each image tile of each resolution level of the image. In the exemplary embodiment of Fig. 6, the index bit stream comprises 64 address data fields 310-1, 310-2, ..., 310-63, 310-64 for the image tiles of the first resolution level 110 of the image 100, followed by 16 address data fields 320-1, 320-2, ..., 320-15, 320-16 for the 16 image tiles of the second resolution level 120 of the image 100, followed by four address data fields 330-1, ..., 330-4 for the four image tiles of the third resolution level 130 of the image 100, followed by one address data field 340-1 for the one image tile of the fourth resolution level 140 of the image 100. Each address data field contains an indication of the position of the associated image data entry in the image bit stream 400 and an indication of the length of the associated image data entry in the image bit stream 400. The border between the indication of the position of the image data entry and the indication of the length of the image data entry is illustrated via a dashed line in each of the address data fields in Fig. 6.

The image bit stream 400 comprises a succession of image data entries. In particular, the image bit stream 400 comprises an image data entry for each image tile of each resolution level. Further in particular, the image bit stream 400 comprises 64 image data entries 410-1, 410-2, ..., 410-63, 410-64 for the 64 image tiles of the image 100 in the first resolution level 110, followed by 16 image data entries 420-1, 420-2, ..., 420-15, 420-16 for the 16 image tiles of the image 100 in the second resolution level 120, followed by four image data entries 430-1, ..., 430-4 for the four image tiles of the image 100 in the third resolution level 130, followed by one image data entry 440-1 for the one image tile 140-1 of the image 100 in the fourth resolution level 140. Each of the image data entries may be in accordance with a suitable image data format, such as one of the following image data formats: tiff, jpg, jpg2000, png, bitmap.

The respective lengths of the image data entries of the image bit stream 400 depend on the amount of image data present in the respective image tiles. For various of the image data entries, such as image data entries 410-1, 410-2 for the first resolution level 110 and image data entries 420-15, 420-16 for the second resolution level 120, the image data entries are comparably very short. This is because the respective image tiles contain substantially only empty space. In contrast thereto, other image data entries, such as image data entries 410-22, 410-23, 410-30, associated with the image tiles 110-22, 110-23, 110-30 indicated in Fig. 4, contain a somewhat larger or much larger amount of image data and have an accordingly increased length. In this way, a high packing density of image data may be achieved in the image bit stream. Not a lot or even no storage space is wasted due to the image data entries having to conform to particular conventions, step sizes, etc.. While having arbitrary lengths and being arranged in direct succession, the individual image data entries may still be accessed quickly and efficiently via the index bit stream 300, as will be laid out below.

As stated above, the image file archive 200 of Fig. 6 may be the result of a method for generating an image file archive in accordance with an exemplary embodiment of the invention, when applied to the image 100 of Fig. 4 / the image pyramid of Fig. 5. In particular, the image file archive 200 of Fig. 6 may be generated from the image pyramid of Fig. 5 as follows.

As a first step, the number m of resolution levels and the level-specific numbers nᵢ of image tiles per resolution level may be populated into the archive set-up field 210.

As a second step, an index type may be set and a specification of said index type may be provided in the form of the index type field 220. As discussed above, the index type is "4P4L" in the exemplary embodiment of Fig. 6. With the index type "4P4L", as discussed above, it is implicitly set that the address data fields of the index bit stream contain information about the position and length of the image data entries. This in turn specifies that the image data entries of the image bit stream 400 may contain image data only.

As a third step, image data entries for all image tiles of all resolution levels are provided and are combined into the image bit stream 400. In particular, the image data entries are appended to each other to form a continuous bit stream 400. In the exemplary embodiment of Fig. 6, the image bit stream 400 contains a succession of 85 image data entries, namely 64 image data entries 410-1, 410-2, ..., 410-63, 410-64 for the first resolution level 110, followed by 16 image data entries 420-1, 420-2, ..., 420-15, 420-16 for the second resolution level 120, followed by four image data entries 430-1, ..., 430-4 for the third resolution level 130, and followed by one image data entry 440-1 for the fourth resolution level 140.

As a fourth step, the index bit stream 300 may be generated. For each of the image data entries of the image bit stream 400, an associated address data field may be generated. Each of said address data fields may be generated to contain both the position of the associated image data entry in the image bit stream 400 and the length of the associated image data entry in the image bit stream 400. Each of the address data fields has a set length. With the index type being "4P4L", each address data field has a length of eight bytes, namely four bytes for the position information of the associated image data entry and four bytes for the length information of the associated image data entry in the exemplary embodiment of Fig. 6. The generated address data field are combined into the index bit stream 300. In particular, the address data fields are appended to each and form a continuous, uninterrupted succession of address data fields in the index bit stream 300. In the exemplary embodiment of Fig. 6, the index bit stream 300 contains 85 address data fields, namely 64 address data fields 310-1, 310-2, ..., 310-63, 310-64 for the associated 64 image data entries 410-1, 410-2, ..., 410-63, 410-64 of the first resolution level 110, followed by 16 address data fields 320-1, 320-2, ..., 320-15, 320-16 for the 16 image data entries 420-1, 420-2, ..., 420-15, 420-16 of the second resolution level 120, followed by four address data fields 330-1, ..., 330-4 for the four image data entries 430-1, ..., 430-4 of the third resolution level 130, followed by one address data field 240-1 for the one image data entry 440-1 of the fourth resolution level 140. The totality of said rules for generating the index bit stream 300 from the basic information regarding the set-up of the image pyramid, as for example contained in the archive set-up field 210, and from the basic information regarding the index type, as for example contained in the index type field 220, is also referred to as index generation scheme herein.

After being generated, the image file archive 200 may be stored at any suitable location, such as locally on a local computer or remotely on a cloud-based server.

The image data in the image file archive 200 may be quickly and efficiently accessed on an image tile basis. In case a specific image tile of a specific resolution level is to be accessed, the information contained in the archive set-up field 210 and the index type field 220 may be used to determine the position of the address data field of the specific image tile within the index bit stream 300. On the basis of the information within the specific address data field, associated with the specific image tile, the position and length of the specific image data entry, associated with the specific image tile, may be determined within the image bit stream 400. With said information, the desired image data entry may be directly and individually read out from the image bit stream 400.

For example, in case a user is interested in the fourth image tile 130-4 of the third resolution level 130, the associated image data may be retrieved from the image file archive 200 as follows.

As a first step, the position of the address data field 330-4, associated with the fourth image tile 130-4 of the third resolution level 130, is determined. This is done with the help of the information contained in the archive set-up field 210 and the index type field 220. In particular, from the archive set-up field 210, it is determined that (64 + 16 + 3) = 83 address data fields are contained in the index bit stream 300 before the address data field 330-4 that is to be accessed. Generally speaking, the sum of all numbers of image tiles of resolution levels with higher number of image tiles as well as the number of those image tiles that have a lower running number within the specific resolution level represent the number of address data fields before the specific address data field that is of interest. From the index type field 220, it may be determined that each address data field has a length of eight bytes. On the basis of these pieces of information, it may be determined that the specific address data field 330-4, which is of interest, starts after (64 + 16 + 3) x 8 bytes = 664 bytes of the index bit stream 300. The totality of said rules for selecting the specific address data field and determining the position of the specific address data field in the index bit stream 300 from the basic information regarding the set-up of the image pyramid, as for example contained in the archive set-up field 210, and from the basic information regarding the index type, as for example contained in the index type field 220, is also referred to as index access scheme herein.

As a second step, the information in the index bit stream 300 that is of interest, namely the information within the specific address data field 330-4, is accessed in a targeted manner. On the basis of said information, the associated image data entry 430-4 can be accessed and read out from the image bit stream 400 in a targeted manner. In particular, the specific image data entry 430-4 can be accessed without accessing / reviewing / analyzing any other part of the image bit stream 400. Via the described two-stage procedure of directly accessing a specific address data field and accessing the specific image data entry, a very quick and efficient retrieval of image data for a specific image tile may be achieved.

On the basis of said image tile level access of image data from the image file archive 200, a method for restoring a partial image from the image file archive 200 is described with reference to Fig. 3.

As a first step, the method may receive a user selection regarding the area of interest 74, as indicated in the preview 72 in any suitable manner, as described above. The user selection indicates the location and extension of the area of interest 74 within the image 100.

As a second step, the method takes into account the location and extension of the area of interest 74 and the screen resolution of the screen 70 and determines a suitable resolution level for displaying the area of interest in the full screen window 76 of the screen 70. In the exemplary embodiment of Fig. 3, the method determines this resolution level to be the second resolution level 120. In other words, the method selects the specific resolution level to be the second resolution level 120. In general, the smaller the area of interest 74 is, as compared to the total extension of the image 100, and/or the higher the screen resolution of the screen 70 is, the more the method turns towards resolution levels with high numbers of image tiles. Conversely, the larger the extension of the area of interest 74 is, as compared to the total extension of the image 100, and/or the smaller the screen resolution of the screen 70 is, the more the method turns to resolution levels that have lower numbers of image tiles.

As a third step, the method determines the specific image tiles in the second resolution level that are required for assembling the area of interest from the image tiles of the second resolution level 120. In the exemplary embodiment of Fig. 3, the method may determine that the image tiles 2, 3, 4, 6, 7, 8, 10, 11, 12 of the second resolution level 120 are required for restoring the partial image. In other words, the specific image tiles are image tiles 2, 3, 4, 6, 7, 8, 10, 11, 12 of the second resolution level 120 in the depicted example.

As a fourth step, the method accesses the image data entries for the image tiles 2, 3, 4, 6, 7, 8, 10, 11, 12 of the second resolution level 120 from the image file archive 200 in the manner described above with respect to a single image tile.

As a fifth step, the method combines those nine image tiles into an assembled image and crops said assembled image to correspond to the area of interest 74 and to fit the full screen window 76 in a suitable manner.

As a sixth step, the method displays the cropped assembled image in the full screen window 76, thus providing an enlarged representation of the area of interest 74.

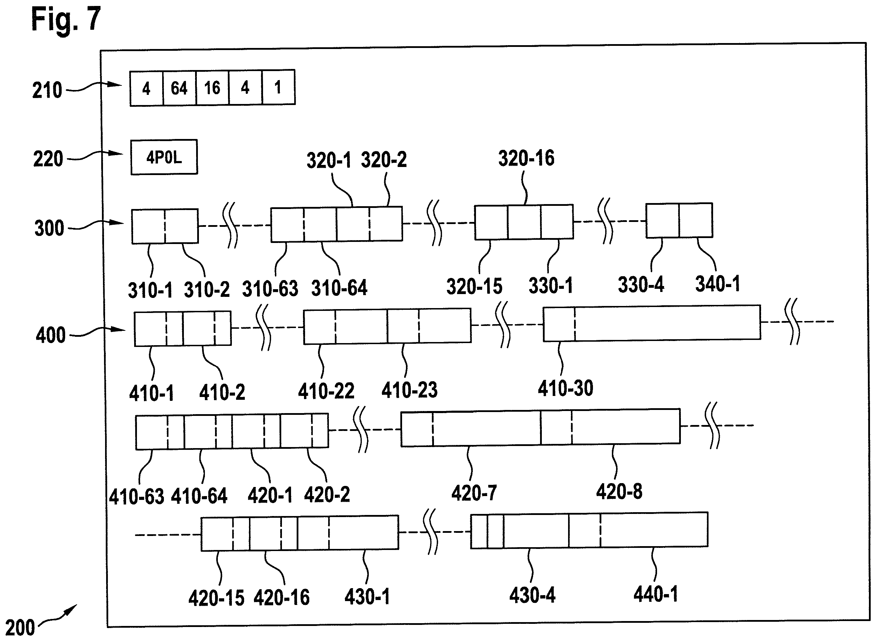

Fig. 7 shows an image file archive 200 in accordance with another exemplary embodiment of the invention. The image file archive 200 of Fig. 7 may be the result of a method for generating an image file archive in accordance with an exemplary embodiment of the invention. In particular, the image file archive 200 of Fig. 7 may be the result of a method for generating an image file archive in accordance with an exemplary embodiment of the invention, when applied to the image 100 of Fig. 4 / the image pyramid of Fig. 5.

The image file archive 200 of Fig. 7 has the same high-level structure as the image file archive 200 of Fig. 6. It also comprises an archive set-up field 210, an index type field 220, an index bit stream 300, and an image bit stream 400. As compared to the image file archive 200 of Fig. 6, a different index type is used for the image file archive 200 of Fig. 7, which results in the index bit stream 300 and the image bit stream 400 having a different structure.

The image file archive 200 of Fig. 7 has the index type "4P0L", which means that every address data field contains four bytes of information regarding the position of the associated image data entry in the image bit stream 400 and zero bytes of information regarding the length of the associated image data entry in the image bit stream 400. In other words, the index type "4P0L" indicates that the address data fields only contain position information regarding the associated image data entries and do not contain length information regarding the associated image data entries. The index type 4P0L further specifies that each address data field has a total length of four bytes.

As compared to the image file archive 200 of Fig. 6, the index bit stream 300 is shorter, because the address data fields contain only information about the position of the associated image data entries. On the other hand, as compared to the image file archive 200 of Fig. 6, the image bit stream 400 of the image file archive 200 of Fig. 7 is longer. This is because each image data entry comprises an entry header and image data. In Fig. 7, the entry header and the image data are divided by a dashed line for illustrative purposes. Each of the image data fields of the image data entries may be in accordance with a suitable image data format, such as one of the following image data formats: tiff, jpg, jpg2000, png, bitmap.

For accessing a particular image data entry, the position information of said image data entry may be determined from the associated address data field. On the basis of said position information, the entry header of the image data entry in question may be read out. On the basis of the information contained in the entry header, the associated image data of the image data field in question may be read out of the image bit stream 400 in a targeted manner. While this access operation for a specific image data entry, associated with a specific image tile, is slightly different from what has been described with Fig. 6, the general two-stage procedure of determining the position of the address data field from the specific resolution level and the specific image tile in accordance with an index access scheme and the targeted access of the image data entry from the information given in the address data field works in an analogous manner.

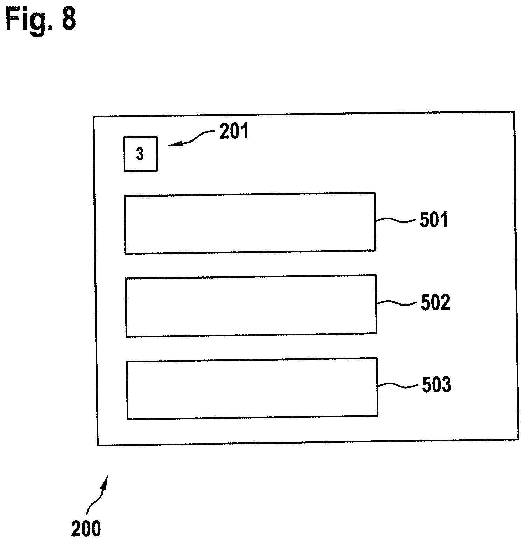

Fig. 8 shows an image file archive 200 in accordance with another exemplary embodiment of the invention. The image file archive 200 of Fig. 8 comprises an image number field 201. In the exemplary embodiment of Fig. 8, the image number field 201 contains a specification that the image file archive 200 comprises image data structures regarding "3" images. In particular, the image file archive 200 comprises three image data structures 501, 502, 503 regarding three images. Each of the image data structures 501, 502, 503 may be structured as described above with respect to Fig. 6 or Fig. 7. In particular, each of the image data structures 501, 502, 503 may have an archive set-up field 210, an index type field 220, an index bit stream 300, and an image bit stream 400, as described above with respect to Fig. 6 or Fig. 7.

In this way, the image file archive 200 of Fig. 8 may combine a plurality of images within one archive structure. The plurality of images may for example be microscopic images of the same sample, taken at different focal planes. The plurality of images may also be images of the same sample, taken with different technologies, such as light microscopy, fluorescence microscopy, spectroscopy-based microscopy techniques, etc.. The beneficial effects of quickly and efficiently accessing the image on an image tile basis per resolution level may thus be extended to image file archives having a plurality of images.

Herein, reference is made to bits and bytes, when describing the index bit stream and the image bit stream, in particular when describing the lengths of certain fields of the index bit stream and the image bit stream. It is understood that the terms bit and byte relate to unit lengths for data fields and that the lengths, as given in bits and bytes, can be converted into each other. In particular, in most application contexts, a byte refers to eight bits.

While the invention has been described with reference to exemplary embodiments, it will be understood by those skilled in the art that various changes may be made without departing from the scope of the invention. In addition, many modifications may be made to adapt a particular situation or material to the teachings of the invention without departing from the essential scope thereof. Therefore, it is intended that the invention not be limited to the particular embodiment disclosed, but that the invention will include all embodiments falling within the scope of the appended claims.

## Claims

1. Method for generating an image file archive (200), comprising:
providing an image (100) in a number m of resolution levels (110, 120, 130, 140), with each of the m resolution levels (110, 120, 130, 140) having a level-specific number nᵢ of image tiles;
providing an image bit stream (400), comprising the image in the m resolution levels (110, 120, 130, 140), with the image bit stream (400) having an image data entry (410-1, ..., 440-1) for each of the nᵢ image tiles of each of the m resolution levels (110, 120, 130, 140);
on the basis of the number m of resolution levels (110, 120, 130, 140) and the level-specific numbers nᵢ of image tiles, providing an index bit stream (300), which comprises a succession of address data fields (310-1, ..., 340-1), with each address data field of the succession of address data fields (310-1, ..., 340-1) being indicative of a position of a particular image data entry of a particular image tile k at a particular resolution level i in the image bit stream,
wherein the address data fields of the succession of address data fields have the same length,
wherein the succession of address data fields (310-1, ..., 340-1) is generated in accordance with an index generation scheme based on the number m of resolution levels (110, 120, 130, 140) and the level-specific numbers n_{¡} of image tiles, and
wherein the index generation scheme is an unambiguous scheme that sets an order of the succession of address data fields in the index bit stream (300); and
combining the image bit stream (400) and the index bit stream (300) into the image file archive (200).

2. Method according to claim 1, further comprising:
including an indication regarding the number m of resolution levels (110, 120, 130, 140) and the level-specific numbers nᵢ of image tiles of the image in the image file archive (200).

3. Method according to any of the preceding claims,
wherein each of the image data entries (410-1, ..., 440-1) in the image bit stream (400) comprises image data only and wherein each address data field of the succession of address data fields (310-1, ..., 340-1) is indicative of the position of the particular image data entry of the particular image tile k at the particular resolution level i in the image bit stream (400) and indicative of a length of the particular image data entry of the particular image tile k at the particular resolution level i in the image bit stream (400),
or
wherein each of the image data entries (410-1, ..., 440-1) in the image bit stream (400) comprises an entry header and image data, with the entry header of the particular image data entry of the particular image tile k at the particular resolution level i being indicative of a length of the image data in the particular image data entry of the particular image tile k at the particular resolution level i in the image bit stream (400).

4. Method according to any of the preceding claims, further comprising:
including an index type specification in the image file archive (200), the index type specification indicating a length of the address data fields (310-1, ..., 340-1) in the index bit stream (300) and indicating whether the address data fields (310-1, ..., 340-1) of the index bit stream (300) contain the position or the position and length of the image data entries (410-1, ..., 440-1) in the image bit stream (400).

5. Method according to any of the preceding claims, wherein the image bit stream (400) is provided in the form of an embedded file archive, in particular in the form of an embedded zip archive.

6. Method according to any of the preceding claims, wherein the image (100) is a microscopic image, resulting from scanning of a sample (12) via a digital microscope (2).

7. Method for providing a microscopic image (100) in an image file archive (200), comprising:
scanning a sample (12), using a digital microscope (2), for creating a microscopic image (100);
providing said microscopic image (100) in a number m of resolution levels (110, 120, 130, 140), with each of the m resolution levels having a level-specific number nᵢ of image tiles; and
with said microscopic image (100), carrying out the method for generating an image file archive (200) in accordance with any of the preceding claims.

8. Method for restoring a partial image from an image file archive (200), the image file archive (200) comprising an image bit stream (400), comprising an image (100) in a number m of resolution levels (110, 120, 130, 140), with each of the m resolution levels (110, 120, 130, 140) having a level-specific number nᵢ of image tiles and with the image bit stream (400) having an image data entry (410-1, ..., 440-1) for each of the nᵢ of image tiles of each of the m resolution levels (110, 120, 130, 140), the method comprising:
receiving a user selection regarding an area of interest (74) within the image (100), the user selection indicating the location and extension of the area of interest (74);
on the basis of the location and extension of the area of interest (74), selecting a specific resolution level of the image and determining at least one specific image tile at the specific resolution level, corresponding to the area of interest (74);
from an index bit stream (300), which comprises a succession of address data fields (310-1, ..., 340-1), with each address data field being indicative of a position of a particular image data entry of a particular image tile k at a particular resolution level i in the image bit stream (400), determining at least one position in the image bit stream (400) for at least one specific image data entry, the at least one specific image data entry corresponding to the at least one specific image tile at the specific resolution level,
wherein the address data fields of the succession of address data fields have the same length, and
wherein said determining of the at least one position in the image bit stream (400) for the at least one specific image data entry of the at least one specific image tile k at the specific resolution level comprises selecting at least one specific address data field from the succession of address data fields (310-1, ..., 340-1) in the index bit stream (300) in accordance with an index access scheme, wherein the index access scheme is an unambiguous scheme that derives the order of the succession of address data fields based on the number m of resolution levels (110, 120, 130, 140) and the level-specific numbers nᵢ of image tiles;
and
restoring the partial image from the at least one specific image data entry contained in the image bit stream (400) at the at least one position.

9. Method according to claim 8, further comprising:
obtaining the number m of resolution levels (110, 120, 130, 140) and the level-specific numbers nᵢ of image tiles from the image file archive (200).

10. Method according to claim 8 or 9, wherein the index access scheme is a bit-level index access scheme.

11. Method according to any of claims 8 to 10, wherein said restoring of the partial image comprises combining a plurality of specific image tiles into an assembled image and, in particular, comprises cropping the assembled image to correspond to the area of interest (74).

12. Method according to any of claims 8 to 11, wherein said selecting the specific resolution level of the image and determining at least one specific image tile at the specific resolution level is additionally based on a representation resolution, indicative of a desired size of the partial image, wherein the representation resolution is in particular indicative of a screen resolution of a screen (70) for depicting the partial image.

13. Image file archive (200), comprising:
an image bit stream (400), comprising an image (100) in a number m of resolution levels (110, 120, 130, 140), with each of the m resolution levels (110, 120, 130, 140) having a level-specific number nᵢ of image tiles and with the image bit stream (400) having an image data entry (410-1, ..., 440-1) for each of the nᵢ image tiles of each of the m resolution levels (110, 120, 130, 140); and
an index bit stream (300), which comprises a succession of address data fields (310-1, ..., 340-1), with each address data field being indicative of a position of a particular image data entry of a particular image tile k at a particular resolution level i in the image bit stream (400),
wherein the address data fields of the succession of address data fields have the same length, and
wherein an order of the succession of address data fields in the index bit stream (300) is in accordance with an index generation scheme, wherein the index generation scheme is an unambiguous scheme for setting the order of the succession of address data fields based on the number m of resolution levels (110, 120, 130, 140) and the level-specific numbers nᵢ of image tiles.

## Patentansprüche

1. Verfahren zum Erzeugen eines Bilddateiarchivs (200), aufweisend:
Bereitstellen eines Bildes (100) in einer Anzahl m von Auflösungsstufen (110, 120, 130, 140), wobei jede der m Auflösungsstufen (110, 120, 130, 140) eine stufenspezifische Anzahl nᵢ von Bildkacheln aufweist;
Bereitstellen eines Bildbitstroms (400), der das Bild in den m Auflösungsstufen (110, 120, 130, 140) aufweist, wobei der Bildbitstrom (400) einen Bilddateneintrag (410-1, ..., 440-1) für jede der nᵢ Bildkacheln jeder der m Auflösungsstufen (110, 120, 130, 140) aufweist;
auf Grundlage der Anzahl m von Auflösungsstufen (110, 120, 130, 140) und der stufenspezifischen Anzahl nᵢ von Bildkacheln, Bereitstellen eines Indexbitstroms (300), der eine Folge von Adressdatenfeldern (310-1, ..., 340-1) aufweist, wobei jedes Adressdatenfeld der Folge von Adressdatenfeldern (310-1, ..., 340-1) eine Position eines bestimmten Bilddateneintrags einer bestimmten Bildkachel k auf einer bestimmten Auflösungsstufe i in dem Bildbitstrom angibt,
wobei die Adressdatenfelder der Folge von Adressdatenfeldern die gleiche Länge haben,
wobei die Folge von Adressdatenfeldern (310-1, ..., 340-1) gemäß einem Indexerzeugungsschema auf Grundlage der Anzahl m von Auflösungsstufen (110, 120, 130, 140) und der stufenspezifischen Anzahl nᵢ von Bildkacheln erzeugt wird und
wobei das Indexerzeugungsschema ein eindeutiges Schema ist, das eine Reihenfolge der Folge von Adressdatenfeldern in dem Indexbitstrom (300) vorgibt; und
Kombinieren des Bildbitstroms (400) und des Indexbitstroms (300) in das Bilddateiarchiv (200).

2. Verfahren nach Anspruch 1, ferner aufweisend:
Aufnehmen einer Angabe bezüglich der Anzahl m von Auflösungsstufen (110, 120, 130, 140) und der stufenspezifischen Anzahl nᵢ von Bildkacheln des Bildes in das Bilddateiarchiv (200).

3. Verfahren nach einem der vorhergehenden Ansprüche,
wobei jeder der Bilddateneinträge (410-1, ..., 440-1) in dem Bildbitstrom (400) nur Bilddaten aufweist und wobei jedes Adressdatenfeld der Folge von Adressdatenfeldern (310-1, ..., 340-1) die Position des bestimmten Bilddateneintrags der bestimmten Bildkachel k auf der bestimmten Auflösungsstufe i in dem Bildbitstrom (400) und eine Länge des bestimmten Bilddateneintrags der bestimmten Bildkachel k auf der bestimmten Auflösungsstufe i in dem Bildbitstrom (400) angibt,
oder
wobei jeder der Bilddateneinträge (410-1, ..., 440-1) in dem Bildbitstrom (400) einen Eintrag-Header und Bilddaten aufweist, wobei der Eintrag-Header des bestimmten Bilddateneintrags der bestimmten Bildkachel k auf der bestimmten Auflösungsstufe i eine Länge der Bilddaten in dem bestimmten Bilddateneintrag der bestimmten Bildkachel k auf der bestimmten Auflösungsstufe i in dem Bildbitstrom (400) angibt.

4. Verfahren nach einem der vorhergehenden Ansprüche, ferner aufweisend:
Aufnehmen einer Indextypspezifikation in das Bilddateiarchiv (200), wobei die Indextypspezifikation eine Länge der Adressdatenfelder (310-1, ..., 340-1) in dem Indexbitstrom (300) angibt und angibt, ob die Adressdatenfelder (310-1, ..., 340-1) des Indexbitstroms (300) die Position oder die Position und die Länge der Bilddateneinträge (410-1, ..., 440-1) in dem Bildbitstrom (400) enthalten.

5. Verfahren nach einem der vorhergehenden Ansprüche, wobei der Bildbitstrom (400) in Form eines eingebetteten Dateiarchivs, insbesondere in Form eines eingebetteten Zip-Archivs, bereitgestellt wird.

6. Verfahren nach einem der vorhergehenden Ansprüche, wobei das Bild (100) ein mikroskopisches Bild ist, das durch Abtasten einer Probe (12) mittels eines digitalen Mikroskops (2) entstanden ist.

7. Verfahren zum Bereitstellen eines mikroskopischen Bildes (100) in einem Bilddateiarchiv (200), aufweisend:
Abtasten einer Probe (12) unter Verwendung eines digitalen Mikroskops (2) zum Erzeugen eines mikroskopischen Bildes (100);
Bereitstellen des mikroskopischen Bildes (100) in einer Anzahl m von Auflösungsstufen (110, 120, 130, 140), wobei jede der m Auflösungsstufen eine stufenspezifische Anzahl nᵢ von Bildkacheln aufweist; und
Ausführen des Verfahrens zum Erzeugen eines Bilddateiarchivs (200) nach einem der vorhergehenden Ansprüche mit dem mikroskopischen Bild (100).

8. Verfahren zum Wiederherstellen eines Teilbildes aus einem Bilddateiarchiv (200), wobei das Bilddateiarchiv (200) einen Bildbitstrom (400) aufweist, der ein Bild (100) in einer Anzahl m von Auflösungsstufen (110, 120, 130, 140) aufweist, wobei jede der m Auflösungsstufen (110, 120, 130, 140) eine stufenspezifische Anzahl nᵢ von Bildkacheln aufweist und wobei der Bildbitstrom (400) einen Bilddateneintrag (410-1, ..., 440-1) für jede der nᵢ Bildkacheln jeder der m Auflösungsstufen (110, 120, 130, 140) aufweist, wobei das Verfahren aufweist:
Empfangen einer Benutzerauswahl bezüglich eines Bereichs von Interesse (74) innerhalb des Bildes (100), wobei die Benutzerauswahl die Stelle und Ausdehnung des Bereichs von Interesse (74) angibt;
auf Grundlage der Stelle und Ausdehnung des Bereichs von Interesse (74), Auswählen einer spezifischen Auflösungsstufe des Bildes und Bestimmen mindestens einer spezifischen Bildkachel auf der spezifischen Auflösungsstufe, die dem Bereich von Interesse (74) entspricht;
aus einem Indexbitstrom (300), der eine Folge von Adressdatenfeldern (310-1, ..., 340-1) aufweist, wobei jedes Adressdatenfeld eine Position eines bestimmten Bilddateneintrags einer bestimmten Bildkachel k auf einer bestimmten Auflösungsstufe i in dem Bildbitstrom (400) angibt, Bestimmen mindestens einer Position in dem Bildbitstrom (400) für mindestens einen spezifischen Bilddateneintrag, wobei der mindestens eine spezifische Bilddateneintrag der mindestens einen spezifischen Bildkachel auf der spezifischen Auflösungsstufe entspricht,
wobei die Adressdatenfelder der Folge von Adressdatenfeldern die gleiche Länge haben, und
wobei das Bestimmen der mindestens einen Position in dem Bildbitstrom (400) für den mindestens einen spezifischen Bilddateneintrag der mindestens einen spezifischen Bildkachel k auf der spezifischen Auflösungsstufe das Auswählen mindestens eines spezifischen Adressdatenfeldes aus der Folge von Adressdatenfeldern (310-1, ..., 340-1) in dem Indexbitstrom (300) gemäß einem Indexzugriffsschema aufweist, wobei das Indexzugriffsschema ein eindeutiges Schema ist, das die Reihenfolge der Folge von Adressdatenfeldern auf Grundlage der Anzahl m von Auflösungsstufen (110, 120, 130, 140) und der stufenspezifischen Anzahl nᵢ von Bildkacheln ableitet;
und
Wiederherstellen des Teilbildes aus dem mindestens einen spezifischen Bilddateneintrag, der in dem Bildbitstrom (400) an der mindestens einen Position enthalten ist.

9. Verfahren nach Anspruch 8, ferner aufweisend:
Erlangen der Anzahl m von Auflösungsstufen (110, 120, 130, 140) und der stufenspezifischen Anzahl nᵢ von Bildkacheln aus dem Bilddateiarchiv (200).

10. Verfahren nach Anspruch 8 oder 9, wobei das Indexzugriffsschema ein Bit-Level-Indexzugriffsschema ist.

11. Verfahren nach einem der Ansprüche 8 bis 10, wobei das Wiederherstellen des Teilbildes das Kombinieren einer Mehrzahl von spezifischen Bildkacheln zu einem zusammengesetzten Bild aufweist und insbesondere das Zuschneiden des zusammengesetzten Bildes aufweist, so dass es dem Bereich von Interesse (74) entspricht.

12. Verfahren nach einem der Ansprüche 8 bis 11, wobei das Auswählen der spezifischen Auflösungsstufe des Bildes und das Bestimmen mindestens einer spezifischen Bildkachel in der spezifischen Auflösungsstufe zusätzlich auf einer Darstellungsauflösung basiert, die eine gewünschte Größe des Teilbildes angibt, wobei die Darstellungsauflösung insbesondere eine Bildschirmauflösung eines Bildschirms (70) zum Darstellen des Teilbildes angibt.

13. Bilddateiarchiv (200), aufweisend:
einen Bildbitstrom (400), der ein Bild (100) in einer Anzahl m von Auflösungsstufen (110, 120, 130, 140) aufweist, wobei jede der m Auflösungsstufen (110, 120, 130, 140) eine stufenspezifische Anzahl nᵢ von Bildkacheln aufweist und wobei der Bildbitstrom (400) einen Bilddateneintrag (410-1, ..., 440-1) für jede der nᵢ Bildkacheln jeder der m Auflösungsstufen (110, 120, 130, 140) aufweist; und
einen Indexbitstrom (300), der eine Folge von Adressdatenfeldern (310-1, ..., 340-1) aufweist, wobei jedes Adressdatenfeld eine Position eines bestimmten Bilddateneintrags einer bestimmten Bildkachel k auf einer bestimmten Auflösungsstufe i in dem Bildbitstrom (400) angibt,
wobei die Adressdatenfelder der Folge von Adressdatenfeldern die gleiche Länge haben, und
wobei eine Reihenfolge der Folge von Adressdatenfeldern in dem Indexbitstrom (300) einem Indexerzeugungsschema entspricht, wobei das Indexerzeugungsschema ein eindeutiges Schema zum Vorgeben der Reihenfolge der Folge von Adressdatenfeldern auf Grundlage der Anzahl m von Auflösungsstufen (110, 120, 130, 140) und der stufenspezifischen Anzahl n; von Bildkacheln ist.

## Revendications

1. Procédé de génération d'un archive de fichiers d'images (200), comprenant :
fournir une image (100) dans un nombre m de niveaux de résolution (110, 120, 130, 140), chaque niveau de résolution m (110, 120, 130, 140) ayant un nombre spécifique nᵢ de tuiles d'image ;
fournir un flux binaire d'image (400), comprenant l'image dans les m niveaux de résolution (110, 120, 130, 140), le flux binaire d'image (400) ayant une entrée de données d'image (410-1, ... , 440-1) pour chacune des nᵢ tuiles d'image de chacun des m niveaux de résolution (110, 120, 130, 140) ;
sur la base du nombre m de niveaux de résolution (110, 120, 130, 140) et des nombres spécifiques nᵢ de tuiles d'image, fournir un flux binaire d'index (300), qui comprend une succession de champs de données d'adresse (310-1, ... , 340-1), chaque champ de données d'adresse de la succession de champs de données d'adresse (310-1, ... , 340-1) étant indicatif d'une position d'une entrée de données d'image particulière d'une tuile d'image particulière k à un niveau de résolution particulier i dans le flux binaire d'image,
où les champs de données d'adresse de la succession de champs de données d'adresse ont la même longueur,
où la succession de champs de données d'adresse (310-1, ... , 340-1) est générée conformément à un schéma de génération d'index basé sur le nombre m de niveaux de résolution (110, 120, 130, 140) et les nombres spécifiques nᵢ de tuiles d'image, et
où le schéma de génération d'index est un schéma sans ambiguïté qui définit un ordre de la succession de champs de données d'adresse dans le flux binaire d'index (300) ; et combiner le flux binaire d'image (400) et le flux binaire d'index (300) dans l'archive de fichiers d'images (200).

2. Procédé selon la revendication 1, comprenant en outre :
inclure une indication concernant le nombre m de niveaux de résolution (110, 120, 130, 140) et les nombres spécifiques nᵢ de tuiles d'image de l'image dans l'archive de fichiers d'images (200).

3. Procédé selon l'une quelconque des revendications précédentes,
dans lequel chacune des entrées de données d'image (410-1, ... , 440-1) dans le flux binaire d'image (400) comprend uniquement des données d'image et où chaque champ de données d'adresse de la succession de champs de données d'adresse (310-1, ... , 340-1) est indicatif de la position de l'entrée de données d'image particulière de la tuile d'image particulière k au niveau de résolution particulier i dans le flux binaire d'image (400) et indicatif de la longueur de l'entrée de données d'image particulière de la tuile d'image particulière k au niveau de résolution particulier i dans le flux binaire d'image (400),
ou
dans lequel chacune des entrées de données d'image (410-1, ... , 440-1) dans le flux binaire d'image (400) comprend un en-tête d'entrée et des données d'image, l'en-tête d'entrée de l'entrée de données d'image particulière de la tuile d'image particulière k au niveau de résolution particulier i étant indicatif de la longueur des données d'image dans l'entrée de données d'image particulière de la tuile d'image particulière k au niveau de résolution particulier i dans le flux binaire d'image (400).

4. Procédé selon l'une quelconque des revendications précédentes, comprenant en outre :
inclure une spécification de type d'index dans l'archive de fichiers d'images (200), la spécification de type d'index indiquant une longueur des champs de données d'adresse (310-1, ... , 340-1) dans le flux binaire d'index (300) et indiquant si les champs de données d'adresse (310-1, ... , 340-1) du flux binaire d'index (300) contiennent la position ou la position et la longueur des entrées de données d'image (410-1, ... , 440-1) dans le flux binaire d'image (400).

5. Procédé selon l'une quelconque des revendications précédentes, où le flux binaire d'image (400) est fourni sous la forme d'une archive de fichiers intégrée, en particulier sous la forme d'une archive zip intégrée.

6. Procédé selon l'une quelconque des revendications précédentes, où l'image (100) est une image microscopique, résultant du balayage d'un échantillon (12) via un microscope numérique (2).

7. Procédé de fourniture d'une image microscopique (100) dans une archive de fichiers d'images (200), comprenant :
balayer un échantillon (12) à l'aide d'un microscope numérique (2) pour créer une image microscopique (100) ;
fournir ladite image microscopique (100) dans un nombre m de niveaux de résolution (110, 120, 130, 140), chaque niveau de résolution m ayant un nombre spécifique ni de tuiles d'image ; et
avec ladite image microscopique (100), réaliser le procédé de génération d'une archive de fichiers d'images (200) conformément à l'une quelconque des revendications précédentes.

8. Procédé de restauration d'une image partielle à partir d'une archive de fichiers d'images (200), l'archive de fichiers d'images (200) comprenant un flux binaire d'image (400), comprenant une image (100) dans un nombre m de niveaux de résolution (110, 120, 130, 140), chaque niveau de résolution m (110, 120, 130, 140) ayant un nombre spécifique nᵢ de tuiles d'image et le flux binaire d'image (400) ayant une entrée de données d'image (410-1, ... , 440-1) pour chacune des nᵢ tuiles d'image de chacun des m niveaux de résolution (110, 120, 130, 140), le procédé comprenant :
recevoir une sélection utilisateur concernant une zone d'intérêt (74) dans l'image (100), la sélection utilisateur indiquant l'emplacement et l'étendue de la zone d'intérêt (74) ;
sur la base de l'emplacement et de l'étendue de la zone d'intérêt (74), sélectionner un niveau de résolution spécifique de l'image et déterminer au moins une tuile d'image spécifique au niveau de résolution spécifique, correspondant à la zone d'intérêt (74) ;
à partir d'un flux binaire d'index (300), qui comprend une succession de champs de données d'adresse (310-1, ... , 340-1), chaque champ de données d'adresse étant indicatif d'une position d'une entrée de données d'image particulière d'une tuile d'image particulière k à un niveau de résolution particulier i dans le flux binaire d'image (400), déterminer au moins une position dans le flux binaire d'image (400) pour au moins une entrée de données d'image spécifique, ladite entrée de données d'image spécifique correspondant à ladite tuile d'image spécifique au niveau de résolution spécifique,
où les champs de données d'adresse de la succession de champs de données d'adresse ont la même longueur, et
où ladite détermination de ladite position dans le flux binaire d'image (400) pour ladite entrée de données d'image spécifique de ladite tuile d'image spécifique k au niveau de résolution spécifique comprend la sélection d'au moins un champ de données d'adresse spécifique de la succession de champs de données d'adresse (310-1, ... , 340-1) dans le flux binaire d'index (300) conformément à un schéma d'accès à l'index, où le schéma d'accès à l'index est un schéma sans ambiguïté qui dérive l'ordre de la succession de champs de données d'adresse basé sur le nombre m de niveaux de résolution (110, 120, 130, 140) et les nombres spécifiques nᵢ de tuiles d'image ;
et
restaurer l'image partielle à partir de ladite entrée de données d'image spécifique contenue dans le flux binaire d'image (400) à ladite position.

9. Procédé selon la revendication 8, comprenant en outre :
obtenir le nombre m de niveaux de résolution (110, 120, 130, 140) et les nombres spécifiques nᵢ de tuiles d'image à partir de l'archive de fichiers d'images (200).

10. Procédé selon la revendication 8 ou 9, où le schéma d'accès à l'index est un schéma d'accès à l'index au niveau du bit.

11. Procédé selon l'une quelconque des revendications 8 à 10, où ladite restauration de l'image partielle comprend la combinaison d'une pluralité de tuiles d'image spécifiques en une image assemblée et, en particulier, comprend le recadrage de l'image assemblée pour correspondre à la zone d'intérêt (74).

12. Procédé selon l'une quelconque des revendications 8 à 11, où ladite sélection du niveau de résolution spécifique de l'image et la détermination d'au moins une tuile d'image spécifique au niveau de résolution spécifique est également basée sur une résolution de représentation, indicative d'une taille souhaitée de l'image partielle, où la résolution de représentation est en particulier indicative d'une résolution d'écran d'un écran (70) pour afficher l'image partielle.

13. Archive de fichiers d'images (200), comprenant :
un flux binaire d'image (400), comprenant une image (100) dans un nombre m de niveaux de résolution (110, 120, 130, 140), chaque niveau de résolution m (110, 120, 130, 140) ayant un nombre spécifique ni de tuiles d'image et le flux binaire d'image (400) ayant une entrée de données d'image (410-1, ... , 440-1) pour chacune des nᵢ tuiles d'image de chacun des m niveaux de résolution (110, 120, 130, 140) ; et
un flux binaire d'index (300), qui comprend une succession de champs de données d'adresse (310-1, ... , 340-1), chaque champ de données d'adresse étant indicatif d'une position d'une entrée de données d'image particulière d'une tuile d'image particulière k à un niveau de résolution particulier i dans le flux binaire d'image (400),
où les champs de données d'adresse de la succession de champs de données d'adresse ont la même longueur, et
où un ordre de la succession de champs de données d'adresse dans le flux binaire d'index (300) est conforme à un schéma de génération d'index, où le schéma de génération d'index est un schéma sans ambiguïté qui définit l'ordre de la succession de champs de données d'adresse basé sur le nombre m de niveaux de résolution (110, 120, 130, 140) et les nombres spécifiques nᵢ de tuiles d'image.
